# EUROPEAN PATENT APPLICATION

(11) **EP 2 839 765 A1**
(43) Date of publication of application: **25.02.2015**
(21) Application number: 13777695.1
(22) Date of filing: 21.03.2013
(51) Int. Cl.: A47J 31/40, A47J 31/44

(54) **COFFEE MACHINE**

(30) Priority: 16.04.2012 KR 20120039372
(71) Applicant: Kim, Seoheon, Chungcheongbuk-do 361-825 (KR)
(72) Inventor: Kim, Seoheon, Chungcheongbuk-do 361-825 (KR)
(74) Representative: Gille Hrabal
(86) International application number: PCT/KR2013/002364
(87) International publication number: WO 2013/157751

(57) **Abstract**

The present invention relates to a coffee machine comprising: a tank 10; a pump 20 which is connected to the tank 10; a cold water line L1 which is connected to the pump 20; a heating container 30 which is connected to the cold water line L1; a hot water line L2 which is connected to the heating container 30; a capsule holder 40 which is connected to the hot water line L2, and which has a coffee extraction hole 42; a cup support member 50 which is provided below the coffee extraction hole 42; a load cell 60 which is provided below the cup support member 50; and a control module 70 which is electrically connected to the load cell 60. Thus, since a fixed amount of coffee can be consistently extracted, it is possible to supply coffee having a uniform taste and flavor.

## Description

### [Technical Field]

The present invention relates to a coffee machine, more particularly, a coffee machine which can always provide a user with a fixed amount of coffee conveniently and efficiently by a pressing operation of a button.

### [Background Art]

Generally, a coffee machine is referred to a device that can easily and quickly extract coffee through a series of processes. And as coffee becomes widely popular, its supply shows a gradual rising trend.

To go along with such a trend, ceaseless research and development to improve functionality of coffee machines are being conducted.

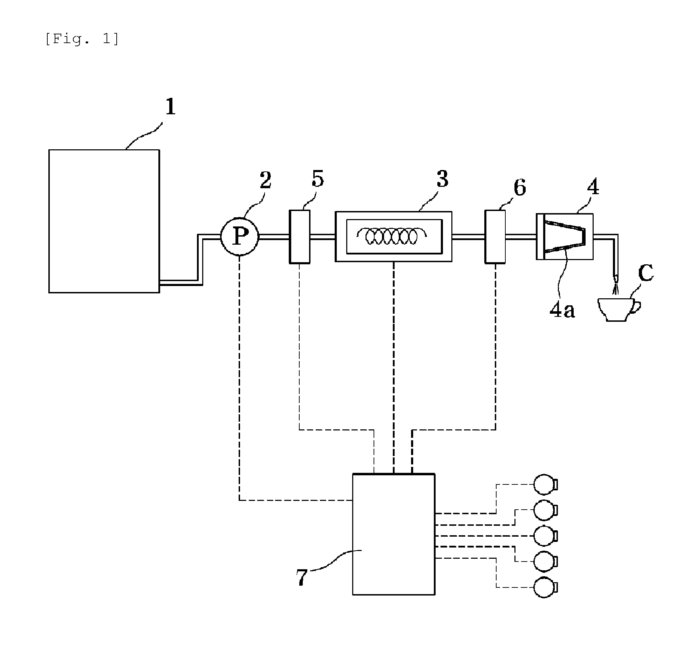

A conventional coffee machine is disclosed in Patent Laid-Open Publication No. 10-2010-0063069. As illustrated in Fig. 1, this coffee machine comprises: a water tank 1; an electric pump 2 for pumping water stored in the water tank 1; a heater 3 for heating the water being pumped by the electric pump 2; a capsule holder 4 in which the water heated in the heater 3 is used to melt coffee powder loaded in a coffee capsule 4A and extract coffee; a flow sensor 5 installed between the electric pump 2 and the heater 3; a temperature sensor 6 installed in the rear of the heater 3 and for detecting water temperature; and a control circuit 7 for controlling each configuration.

In particular, the flow sensor 5 is installed to detect the amount of the water flow supplied from the water tank 1 in order to control the extraction volume of coffee.

However, although this coffee machine supplies a fixed amount of water using the flow sensor 5 and the control circuit 7, changes in the state of water and others occur while water passes through the heater 3 and the capsule holder 4, which eventually always brings a bit of change to the amount of coffee extract in a coffee cup C.

Thus, it creates a problem which is unable to provide users with a uniform taste and flavor of coffee at all times.

Meanwhile, when the flow sensor 5 is installed in the rear of the heater 3, the changes in the amount of coffee extract according to the state of the coffee capsule 4A cannot be measured and the life of the flow sensor 5 can be shortened by the high temperature of heated water and its pressure. In addition, when the flow sensor 5 is installed in the rear of the capsule holder 4, the flow sensor 5 can likely be damaged or malfunction because of the surrounding environment including a minute amount of coffee power produced during the extraction of coffee.

And this coffee machine is disadvantageous due to its incapability of providing users with various kinds of coffee according to their preferences.

### [Disclosure]

### [Technical Problem]

The present invention is devised to solve such problems and the object of the present invention is to provide a coffee machine which can accurately extract a fixed amount of coffee at all times and serve various types of coffee in accordance with the preference of a user.

### [Technical Solution]

In order to solve the problems hereinbefore, a coffee machine according to the present invention comprises: a tank; a pump connected to the tank; a cold water line connected to the pump; a heating container connected to the cold water line and for heating the cold water supplied through the cold water line; a hot water line connected to the heating container; a capsule holder connected to the hot water line and equipped with a coffee extraction hole; a cup support member installed below the coffee extraction hole; a load cell attached to the cup support member; a control module which controls the amount of coffee extracted through the coffee extraction hole according to an electric signal outputted from the load cell; a hot water branch line branched from the hot water line, and its distal end is placed above the cup support member; and a hot water control valve installed in the branched region of the hot water line and for controlling the direction of flow of hot water.

### [Advantageous Effects]

A coffee machine according to the present invention controls the volume of the extraction by detecting the exact weight of the coffee extracted through a load cell into a cup, and thus is capable of extracting a fixed amount of coffee at all times.

Accordingly, it can always provide a coffee machine user with a uniform taste and flavor of coffee.

Also, according to a pressing operation of a button, the coffee machine can provide a user with various kinds of coffee.

And because the load cell is attached to a cup support member which is externally exposed, it allows relatively easy maintenance.

### [Description of Drawings]

FIG. 1 is a schematic diagram of a conventional coffee machine.
Fig. 2 is a schematic diagram illustrating a first exemplary embodiment of a coffee machine according to the present invention.
Fig. 3 is a schematic diagram illustrating a second exemplary embodiment of a coffee machine according to the present invention.
Fig. 4 is a flow chart illustrating an operation process according to a pressing operation of a first button.
Fig. 5 is a flow chart illustrating an operation process according to a pressing operation of a second button.

### [Best Mode]

Hereunder is given a more detailed description of a coffee machine according to the present invention using appended drawings.

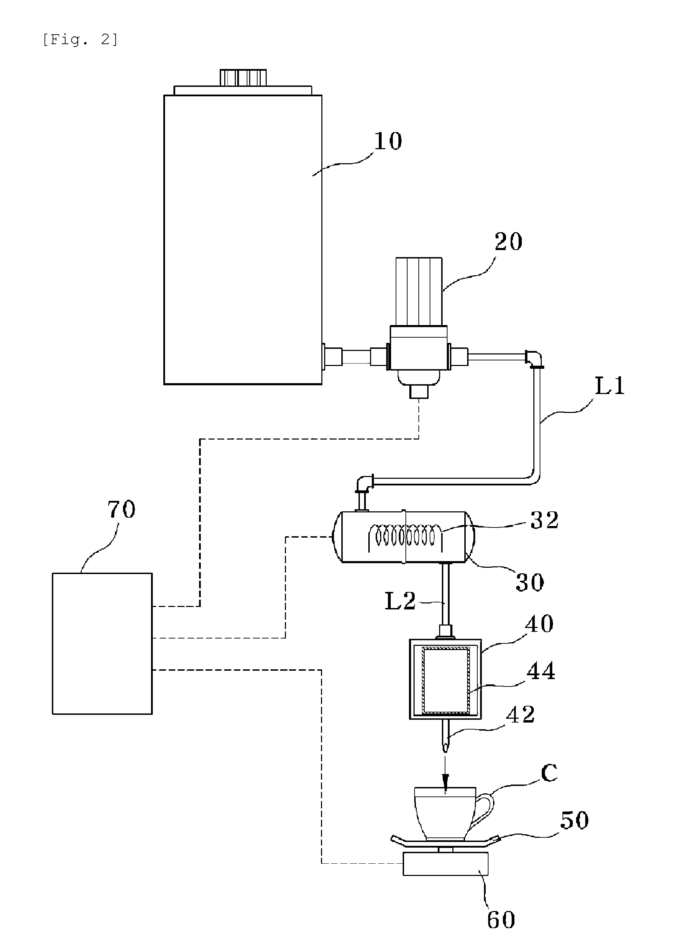

Fig. 2 is a schematic diagram illustrating a first exemplary embodiment of a coffee machine according to the present invention. A coffee machine according to the present invention comprises: a tank 10, a pump 20 connected to the tank 10; a cold water line L1 connected to the pump 20; a heating container 30 connected to the cold water line L1; a hot water line L2 connected to the heating container 30; a capsule holder 40 connected to the hot water line L2; a cup support member 50 installed below the capsule holder 40; a load cell 60 attached to the cup support member 50; and a control module 70 electrically connected to the load cell 60.

The tank 10 stores cold water inside and can be replaced with a pipeline through which cold water is supplied from the outside. In particular, when a pipeline substitutes for the tank 10, it is recommended to have a means for filtering on the pipeline in order to efficiently purify cold water.

The pump 20 pumps the cold water stored in the tank 10 to high-pressure transfer it to the cold water line L1, and a variety of well-known pumps can be selectively used for the pump 20.

Meanwhile, a control valve(not shown) for controlling the discharge of water can be installed between the pump 20 and the tank 10.

The cold water line L1 which is to provide the heating container 30 with the cold water discharged from the tank 10 is pipe-shaped and closely disposed between the pump 20 and the heating container 30.

The heating container 30 is for heating the cold water supplied through the cold water line L1 and equipped with a heater 32 therein. The shape of the heating container 30 and the type of the heater 32 can be properly altered within the range of which cold water can be smoothly heated.

The hot water line L2 which is to provide the capsule holder 40 with the hot water heated in the heating container 30 is pipe-shaped and disposed between the heating container 30 and the capsule holder 40.

The capsule holder 40 holds a capsule coffee 44 filled with coffee power inside and the bottom of it is attached to a coffee extraction hole 42 for extracting coffee into a coffee cup C, wherein coffee is produced while the hot water supplied through the hot water line L2 is provided to the coffee capsule 44. The coffee extraction hole 42 can be either formed integrally to the capsule holder 40 or coupled together with the capsule holder 40 as a separate configuration.

And the capsule holder 40 is equipped with a connection means(not shown) which is connected to the coffee capsule 44 in order to provide the coffee capsule 44 with hot water and extract coffee produced from the coffee capsule 44.

Meanwhile, various kinds of capsules can be selected and applied to the coffee capsule 44.

The cup support member 50 is a place on which the coffee cup C is set and separately installed below the coffee extraction hole 42 of the capsule holder 40.

The load cell 60 which is for accurately extracting a fixed amount of coffee at all times by sensing the weight of coffee extract in the coffee cup C to control the volume of extraction, outputs an electric signal to the control module 70 according to the weight of coffee discharged through the coffee extraction hole 42 of the capsule holder 40.

This load cell 60 is installed in the center of the lower part of the cup support member 50, which can significantly enhance the reliability of the coffee extraction volume and its external installation allows easy maintenance.

In addition, the load cell 60 is recommended to be integrally coupled together with or integrally formed to the lower face of the cup support member 50 in order to prevent the flow or separation.

Meanwhile, the load cell 60 is a general term of a force transducer that creates an electrical output proportional to the force being provided, and the principle of the load cell 60 is to obtain an electric signal proportional to the force provided according to the change in the strain gage resistance value of an elastic body, which is produced when force is provided to a metal elastic body adhered to a strain gage. This load cell 60 is a known technology, so the description of specific structure and operating principle thereof will be omitted.

And the cup support member 50 can have either the structure of a cup base which supports the lower part of the coffee cup C or the structure of a cup holder which elastically supports the upper part of a disposable cup including a paper cup and in which case the load cell 60 is integrally coupled together with or integrally formed to the side of the cup holder.

The control module 70 is for controlling coffee extraction to be made according to the control signal input by a user. In particular, the control module 70 controls the amount of coffee extracted through the coffee extraction hole 42 of the capsule holder 40 according to the electric signal outputted from the load call 60.

In this case, the electric signal outputted from the load cell 60 has various sizes of its output proportional to the weight of coffee, and thus the control module 70 is provided with a data table in which the electric signal outputted from the load cell 60 is converted into weight, the data logic which controls the operation order according to the electric signal, and so on. Also, because the weight of the coffee cup C placed on the cup support member 50 can vary according to its type, the difference between the electric signal according to the weight of the coffee cup C and the electric signal according to the weight of the coffee discharged is calculated in order to control the amount of the coffee extract.

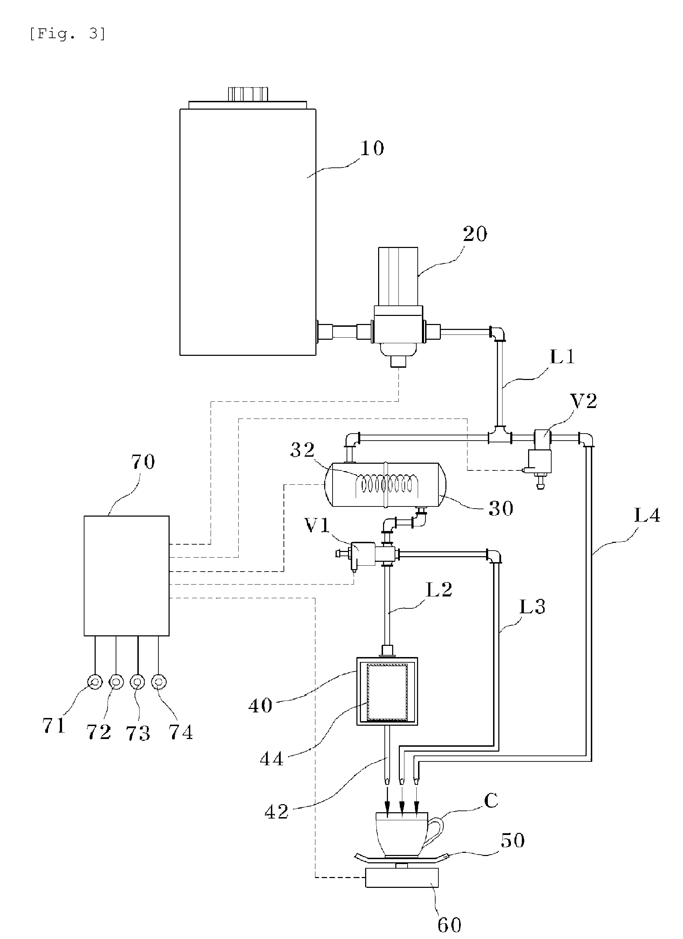

Fig. 3 is a schematic diagram illustrating a second exemplary embodiment of a coffee machine according to the present invention. The coffee machine illustrated in Fig. 3 comprises: a tank 10; a pump 20; a cold water line L1; a heating container 30 equipped with a heater 32; a hot water line L2; a coffee extraction hole 42; a capsule holder 40 for holding a coffee capsule 44 inside; a cup support member 50; a load cell 60; a control module 70; a hot water branch line L3; a hot water control valve V1; a cold water branch line L4; and a cold water control valve V2.

Since the configuration stated hereinbefore has the same contents as the coffee machine equipped with a load cell described through the Fig. 2, detailed explanation will be omitted, other than the components installed for producing different types of coffee including the hot water branch line L3, the hot water control valve V1, a cold water branch line L4, the cold water control valve V2, and the control module 70.

The hot water branch line L3 is installed in order to produce a different type of coffee by mixing hot water to the coffee that is produced. For example, the espresso coffee that is produced is mixed with hot water through the hot water branch line L3 in order to produce Americano coffee. This hot water branch line L3 is branched from the hot water line L2, and its distal end is placed above the cup support member 50.

And the hot water control valve V1 is installed in the branched region of the hot water line L2 to selectively control the direction of flow of hot water towards either the hot water line L2 or the hot water branch line L3. A solenoid valve is recommended to be used for this hot water control valve V1.

The cold water branch line L4 is installed in order to produce a different type of coffee by mixing cold water to the coffee that is produced. For example, the espresso coffee that is produced is mixed with cold water through the cold water branch line L4 and ice can be added according to the personal preference in order to make an iced Americano coffee. The cold water branch line L4 is branched from the cold water line L1, and its distal end is placed above the cup support member 50.

And the cold water control valve V2 is installed on the branched region of cold water line L1 or the cold water branched line L4 in order to selectively control the direction of flow of cold water towards the cold water branch line L4. When this cold water control valve V2 is installed in the branched region of the cold water line L1, a solenoid valve is used.

The control module 70 controls the operation of the pump 20, the heating container 30, the load cell 60, the hot water control valve V1, and the cold water control valve V2.

This control module 70 is equipped with a first and a second button 71, 72 for selectively producing various kinds of coffee, and a third and a fourth button 73, 74 for additionally providing hot water and cold water into the coffee cup C through the hot water branched line L3 and the cold water branch line L4 respectively.

A pressing operation of the first button 71 extracts coffee, and the time of the button being pressed controls the amount of coffee extract. Also, a pressing operation of the second button 72 extracts coffee, and according to the time of the button being pressed, either hot water through the hot water branched line L3 or cold water through the cold water branch line L4 is discharged.

And the third and the fourth button 73, 74 are user selection buttons for providing additional hot water or cold water to the coffee that is produced according to a user's preference. This is, a pressing operation of the third or the fourth button 73, 74 discharges hot water through the hot water branched line L3 or cold water through the cold water branch line L4, and an additional pressing operation of the third or the fourth 73, 74 button stops discharging hot water through the hot water branch line L3 or cold water through the cold water branch line L4.

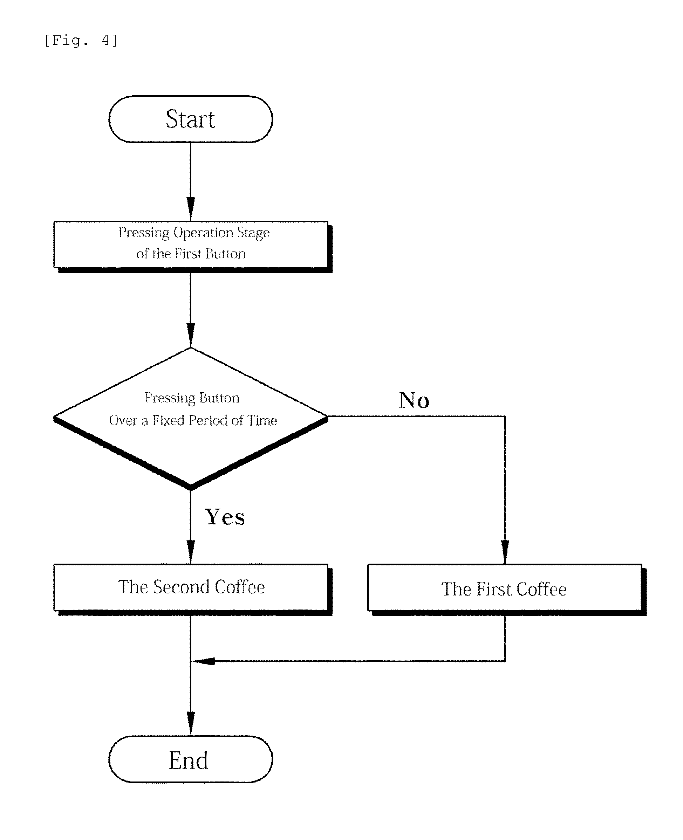

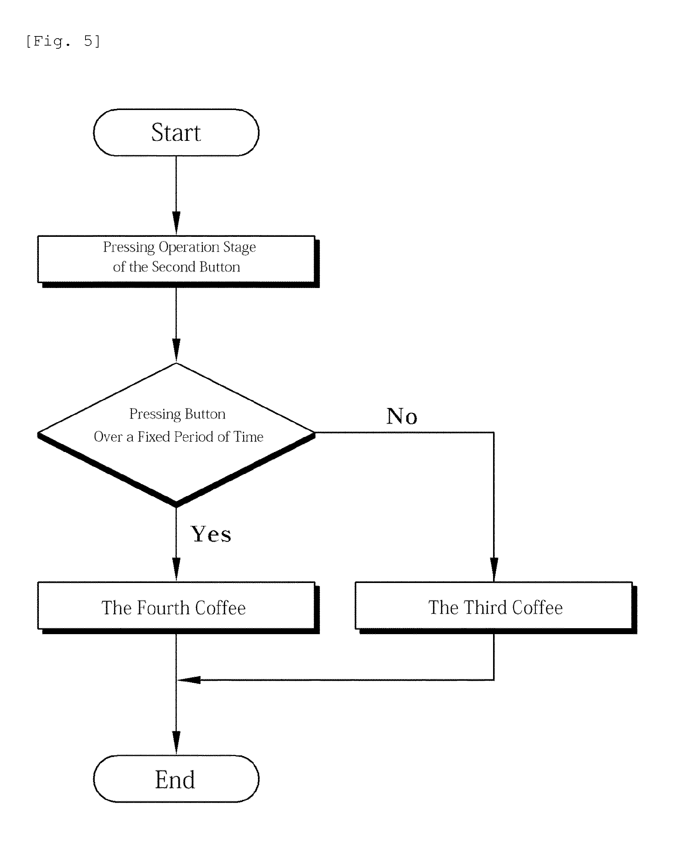

The process of producing various kinds of coffee using the coffee machine described hereinbefore can be briefly illustrated through Fig. 4 and Fig. 5 as follows.

### (1) The first coffee (Espresso Coffee)

A short pressing operation of the first button 71 adjusts the weight of the coffee cup C placed on the cup support member 50 to zero point, and as the hot water control valve V1 and the cold water control valve V2 operate to open the cold water line L1 and the hot water line L2, the pump 20 and the heating container 30 operate to change the cold water supplied through the cold water line L1 into hot water in the hot water line L2, and then the hot water passes through the coffee capsule 44 being held inside of the capsule holder 40 to extract the first coffee(espresso coffee) through the coffee extraction hole 42.

In this case, the hot water control valve V1 and the cold water control valve V2 block the flow path of the hot water branch line L3 and the cold water branch line L4, while the control module 70 stops the operation of the pump 20 when an electric signal according to the amount of coffee is detected in the load cell 60, which terminates coffee extracting operation.

### (2) The second coffee (Doppio Coffee)

A long pressing operation of the first button 71 produces the second coffee(doppio coffee). The process of producing this second coffee (doppio coffee) is the same as the first coffee(espresso coffee), but the only difference is that the second coffee(doppio coffee) is set to double the quantity of the first coffee(espresso coffee).

### (3) The third coffee (Americano Coffee)

A short pressing operation of the second button 72 produces the third coffee(Americano coffee), and this third coffee (Americano coffee) is produced by providing additional hot water through the hot water branch line L3 after completing the process of producing the first coffee(espresso coffee).

In this case, the control module 70 controls the hot water control valve V1 when an electric signal according to the amount of hot water is detected in the load cell 60, which terminates discharging operation of the hot water through the hot water branch line L3.

In addition, for the variety of flavor and taste of coffee, the process order for coffee and water can be altered.

### (4) The fourth coffee (Iced Americano Coffee)

A long pressing operation of the second button 72 produces the fourth coffee(iced Americano coffee). When producing this fourth coffee(iced Americano coffee), an iced cup filled with ice is used, and cold water is provided through the cold water branch line L4 prior to extracting the first coffee(espresso coffee).

In this case, the control module 70 controls the cold water control valve V2 when an electric signal according to the amount of coffee is detected in the load cell 60, which terminates discharging operation of the cold water through the cold water branch line L4.

In addition, for the variety of flavor and taste of coffee, the process order for coffee and water can be altered.

### [Detailed Description of Main Elements]

10: tank
20: pump
30: heating container
40: capsule holder
42: coffee extraction hole
50: cup support member
60: load cell
70: control module
71: first button
72: second button
73: third button
74: fourth button
L1: cold water line
L2: hot water line
L3: hot water branch line
L4: cold water branch line
V1: hot water control valve
V2: cold water control valve

## Claims

1. A coffee machine comprising:
a tank 10;
a pump 20 connected to the tank 10;
a cold water line L1 connected to the pump 20;
a heating container 30 connected to the cold water line L1 and for heating the cold water supplied through the cold water line L1;
a hot water line L2 connected to the heating container 30;
a capsule holder 40 connected to the hot water line L2 and equipped with a coffee extraction hole 42;
a cup support member 50 installed below the coffee extraction hole 42;
a load cell 60 attached to the cup support member 50;
a control module 70 which controls the amount of coffee extracted through the coffee extraction hole 42 according to an electric signal outputted from the load cell 60;
a hot water branch line L3 branched from the hot water line L2, and its distal end is placed above the cup support member 50;
and a hot water control valve V1 installed in the branched region of the hot water line L2 and for controlling the direction of flow of hot water.

2. The coffee machine according to claim 1, wherein including a cold water branch line L4 branched from the cold water line L1 and its distal end is placed above the cup support member 50; and a cold water control valve V2 installed in the branched region of the cold water line L1 or the cold water branch line L4 in order to control the direction of the flow of cold water.

3. The coffee machine according to claim 2, wherein including a first and a second button 71, 72 for extracting coffee, and a third and a fourth button 73, 74 for providing additional hot water and cold water through the hot water branched line L3 and the cold water branched line L4 respectively.

4. The coffee machine according to claim 3, wherein, according to a pressing operation of the first button 71, the hot water control valve V1 and the cold water control valve V2 operate to open the cold water line L1 and the hot water line L2, while the pump 20 and the heating container 30 operate to change the cold water supplied through the cold water line L1 into hot water in the hot water line L2, and then the hot water passes through a coffee capsule 44 being held inside of the capsule holder 40 to extract coffee through the coffee extraction hole 42.

5. The coffee machine according to claim 4, wherein the amount of coffee extract is adjusted according to the time of the first button 71 being pressed.

6. The coffee machine according to claim 3, wherein, according to a pressing operation of the second button 72, the hot water control valve V1 and the cold water control valve V2 operate to open the cold water line L1 and the hot water line L2, while the pump 20 and the heating container 30 operate to change the cold water supplied through the cold water L1 into hot water in the hot water line L2, and the hot water passes through a coffee capsule 44 being held in the capsule holder 40 to extract coffee through the coffee extraction hole 42, then either hot water is discharged through the hot water branch line L3 or cold water is discharged through the cold water branch line L4.

7. The coffee machine according to claim 3, wherein, a pressing operation of the third or the fourth button 73, 74 discharges hot water or cold water through the hot water branch line L3 or the cold water branch line L4; and an additional pressing operation of the third or the fourth button 73, 74 stops the discharge of hot water through the hot water branch line L3 or cold water through the cold water branch line L4 stops.

8. The coffee machine according to claim 1, wherein, the load cell 60 is integrally coupled together with the cup support member 50.

9. The coffee machine according to claim 1, wherein, the load cell 60 is integrally formed to the cup support member 50.
